# EUROPÄISCHE PATENTSCHRIFT

(11) **EP 3 218 135 B1**
(45) Veröffentlichungstag und Bekanntmachung des Hinweises auf die Patenterteilung: **19.02.2020**
(21) Anmeldenummer: 15791311.2
(22) Anmeldetag: 10.11.2015
(51) Int. Cl.: B23K 9/133, B23K 9/32

(54) **SCHWEISSDRAHTMAGAZIN MIT FEUCHTESCHUTZ**
WELDING WIRE SOOL HOUSING WITH HUMIDITY PROTECTION
COMPARTIMENT POUR FIL DE SOUDAGE PROTÉGÉ CONTRE L'HUMIDITÉ

(30) Priorität: 10.11.2014 DE 102014222905
(43) Veröffentlichungstag der Anmeldung: 20.09.2017
(73) Patentinhaber: Fronius International GmbH, 4643 Pettenbach (AT)
(72) Erfinder: ENNSBRUNNER, Helmut, A-4060 Leonding (AT)
(74) Vertreter: Patentanwälte Pinter & Weiss OG
(86) Internationale Anmeldenummer: PCT/EP2015/076176
(87) Internationale Veröffentlichungsnummer: WO 2016/075125

(56) Entgegenhaltungen:
- DE-A1-102004 011 484
- US-A- 3 108 176

## Beschreibung

Die gegenständliche Erfindung betrifft ein Schweißdrahtmagazin zur Aufnahme eines Schweißdrahtes mit einer Schutzvorrichtung gegen Feuchtigkeit, wobei am Schweißdrahtmagazin eine Spülluftzuführung, in die eine Spülluftversorgungsleitung zur Zuführung von trockener Spülluft mündet, und eine Spülluftabführung mit einem Spülluftauslass zur Abführung von Spülluft aus dem Schweißdrahtmagazin vorgesehen sind, und ein Verfahren zum Schutz eines Schweißdrahtes in einem Schweißdrahtmagazin gegen Feuchtigkeit.

Ein bekanntes Problem beim Schutzgas-Schweißen bestimmter Werkstoffe, insbesondere Aluminium, Titan oder anderer hochreaktiver Metalle, ist die sogenannte Wasserstoff-Porosität. Hierbei kommt es durch Wasserstoff im Bereich der Schweißstelle zu Poren in der Schweißnaht, die die Qualität der Scheißnaht herabsetzen oder die Schweißnaht sogar unbrauchbar machen. Wasserstoff wird beispielsweise häufig durch den zugeführten Schweißdraht eingebracht, da der Schweißdraht Feuchtigkeit aus der Umgebung aufnimmt und aus dieser Feuchtigkeit aufgrund der hohen Temperaturen an der Schweißstelle freier Wasserstoff entsteht. Bei einem Aluminiumdraht als Schweißdraht nimmt der Aluminiumdraht über die Luftfeuchtigkeit Wasser auf und speichert dieses in der Aluminium-Oxid Oberfläche des Aluminiumdrahtes in Form von Wasser und Aluminium-Hydroxid.

Um den Wassergehalt des Schweißdrahtes gering zu halten, wurden bisher schon Schweißdrahtmagazine temperiert, um die relative Luftfeuchtigkeit in der unmittelbaren Umgebung des Schweißdrahtes im Schweißdrahtmagazin zu senken. Die Temperierung des Schweißdrahtmagazins fordert allerdings einen zusätzlichen Vorrichtungsaufwand und führt auch dazu, dass der Schweißdraht und die Drahtförderstrecke mit von der Umgebungstemperatur erhöhten Temperaturen betrieben werden und somit erhöhtem Verschleiß ausgesetzt sind. Das kann den apparativen und sicherheitstechnischen Aufwand des Schweißdrahtmagazin und der Schweißdrahtzuführung erhöhen. Abgesehen davon steigt mit der Temperatur auch die Neigung zur Oxidation am Schweißdraht, was für den Schweißprozess ebenfalls nachteilig sein kann. Nachteilig sind auch der erhöhte Energieverbrauch und eine erschwerte Bedienung für den Schweißer, da für eine nachhaltige Trocknung je nach Umgebungsbedingungen etwa 40°C Übertemperatur erforderlich sind.

Aus der US 3,108,176 A ist ein Schweißdrahtmagazin bekannt, das hermetisch abgeschlossen und mit einem inerten Gas unter Druck gesetzt wird, wobei als inertes Gas auch trockene Luft verwendet werden kann. Der Druck wird durch einen Druckminderer eingestellt, wie an herkömmlichen Gasversorgungen, beispielsweise in Form von Gasflaschen, vorhanden. Damit soll ein Eindringen von Feuchtigkeit in das Schweißdrahtmagazin verhindert werden. Nachteilig bei diesem Verfahren ist, dass kein aktiver Abtransport von Feuchtigkeit, welche beim Einlegen von Schweißdrähten in das System eingebracht wird, vorgesehen ist. Des Weiteren erschwert die hermetische Abdichtung massiv die Bedienung des Gesamtsystems, erhöht die Kosten und verschlechtert die Mobilität. Auch wird für die Bereitstellung des inerten Gas bzw. der trockenen Luft die Verwendung von Gasflaschen vorgeschlagen, welche hinsichtlich Kosten und Logistik nachteilig sind. Die Verwendung eines Druckreglers zur Beaufschlagung des Gesamtsystems mit einem Überdruck hat zusätzlichen Nachteil, dass im Falle von Undichtheiten sehr hohe Massenströme des inerten Gases aus dem System austreten können, was wiederum hohe Kosten zur Folge hat.

Ebenso ist es schon bekannt, das Schweißdrahtmagazin mit einem inerten und trockenen Spülgas zu spülen oder zu fluten, um Wasser vom Schweißdraht im Schweißdrahtmagazin fern zu halten. Eine solche Vorrichtung geht z.B. aus der DE 10 2004 011 484 A1 hervor, bei dem als Spülgas z.B. Argon verwendet wird. Das Spülgas wird in einer Gasflasche zur Verfügung gestellt und dem Schweißdrahtmagazin über eine Spülgasleitung zugeführt. Als nachteilig stellt sich hier allerdings heraus, dass ein eigenes Spülgas benötigt wird, das vorrätig gehalten werden muss. Ebenso muss immer überprüft werden, ob die Gasflasche noch ausreichend Spülgas enthält und die getauscht werden muss, bevor diese leer wird. Das Schweißpersonal muss auch zusätzlich geschult werden, um die Spülvorrichtung richtig bedienen zu können. Das inerte Spülgas verursacht auch hohe Kosten, da ein permanenter Gasfluss notwendig ist und damit große Mengen an Spülgas benötigt werden. Zusätzlich bildet die Verwendung von inertem Spülgas auch ein Gefahrenpotential, da durch den permanenten Austritt von Spülgas Räumlichkeiten mit dem Spülgas geflutet werden können und somit für Schweißpersonal Erstickungsgefahr droht. Damit werden hohe Sicherheitsmaßnahmen notwendig. Ohne Dichtheitsüberwachung und ohne gezielte Führung des Spülgases (z.B. nach außen) sollte dieses Verfahren jedenfalls nicht verwendet werden. Das erhöht den Aufwand für den Schweißprozess und führt auch zu höheren Kosten.

Es ist daher eine Aufgabe der gegenständlichen Erfindung, ein Verfahren und eine Vorrichtung anzugeben, mit der auf einfache und sichere Weise Feuchtigkeit vom Schweißdraht entfernt und das neuerliche Ansammeln von Feuchtigkeit zumindest reduziert, vorzugsweise verhindert werden kann.

Diese Aufgabe wird für das Schweißdrahtmagazin dadurch gelöst, dass in der Spülluftversorgungsleitung eine Durchflussregeleinheit angeordnet ist, die einen Durchfluss von Spülluft durch das Schweißdrahtmagazin einstellt, vor der Durchflussregeleinheit in der Spülluftversorgungsleitung ein erster Druck wirkt, nach der Durchflussregeleinheit in der Spülluftversorgungsleitung und an der Spülluftzuführung ein zweiter Druck wirkt, der niedriger als der erste Druck ist, am Spülluftauslass ein dritter Druck wirkt, der niedriger als der zweiter Druck ist, und sich der zweite Druck an der Spülluftzuführung aus dem eingestellten Durchfluss, dem dritten Druck und dem Strömungswiderstand zwischen der Spülluftzuführung und dem Spülluftauslass ergibt, wobei sich durch die Druckentspannung vom ersten Druck auf den zweiten Druck die relative Feuchtigkeit der Spülluft reduziert.

Das erfindungsgemäße Verfahren zeichnet sich somit dadurch aus, dass Spülluft mit einem ersten Druck und einer ersten relativen Feuchtigkeit einer Durchflussregeleinheit zugeführt wird, in der ein Durchfluss von Spülluft eingestellt wird. Durch den eingestellten Druchfluss, dem Druck am Spülluftauslass und den Strömungsverhältnissen im Schweißdrahtmagazin ergibt sich ein niedrigerer, zweiter Druck an der Spülluftzuführung. Dieses sich einstellende Druckgefälle zwischen zweiten und dritten Druck und der Entspannung der Spülluft an der Durchflussregeleinheit kommt es automatisch zu einer Absenkung der relativen Feuchtigkeit von einer ersten relative Feuchtigkeit vor der Durchflussregeleinheit auf eine zweite relative Feuchtigkeit nach der Durchflussregeleinheit. Das Schweißdrahtmagazin wird dann mit diesem Durchfluss von der derart getrockneten Spülluft gespült. Die Druckverhältnisse im Schweißdrahtmagazin (Druck vor der Durchflussregeleinheit, Druck nach der Durchflussregeleinheit, Druck an der Spülluftzuführung, Druck am Spülluftauslass) ergeben sich im Wesentlichen aus dem eingestellten Druchfluss, dem dritten Druck und den Strömungswiderständen in den Leitungen und im Schweißdrahtmagazin. Um eine ausreichende Spüllufttrocknung zu erreichen, ist somit ein ausreichend hoher Versorgungsdruck vorteilhaft und die Strömungswiderstände in den Leitungen und im Schweißdrahtmagazin sind vorzugsweise niedrig sein. Beides kann einfach sichergestellt bzw. durch entsprechende Dimensionierung erreicht werden. Durch den eingestellten Durchfluss durch das Schweißdrahtmagazin kann eine aktive Entfeuchtung des Schweißdrahtmagazins erreicht werden, da Feuchtigkeit von der durchströmenden, trockenen Spülluft aufgenommen und aus dem Schweißdrahtmagazin abgeführt wird. Die Betriebskosten der Entfeuchtung bzw. des so erreichten Schutzes vor Feuchtigkeit werden primär durch den Druckluftverbrauch definiert. Da diese Lösung zentral einen Durchflussregler einsetzt, sind diese Kosten immer überwachbar und Undichtheiten im System auch dahingehend kein Problem.

Auf diese Weise kann auf einfache und sichere Weise die Feuchtigkeit der zugeführten Spülluft abgesenkt werden, sodass das Schweißdrahtmagazin mit trockener Luft gespült werden kann, um den Wasserstoffeintrag im Schweißdraht minimal zu halten und dabei den Schweißdraht auch vor erhöhter, mit Feuchtigkeit einhergehender Oxidation bzw. Korrosion zu schützen. Damit kann komprimierte Umgebungsluft zum Spülen verwendet werden und es ist nicht erforderlich spezielle Spülgase oder Gasflaschen zu verwenden. Dieses Verfahren ist dabei auch sehr robust, da aufgrund des erfindungsgemäßen Aufbaus (niedrige Strömungswiderstände, konstanter und ausreichender Versorgungsdruck) die durch das Entspannen erzielte relative Feuchtigkeit im Wesentlichen unabhängig vom Durchfluss durch die Durchflussregeleinheit ist. Ebenso ist die Verwendung von Spülluft von Vorteil, da dies gefahrlos ist, vor Ort erzeugt werden kann und praktisch unbegrenzt zur Verfügung steht. Durch den entstehenden Durchfluss von trockener Spülluft durch das Schweißdrahtmagazin, nimmt die Spülluft allfällige, in das Schweißdrahtmagazin eindringende Feuchtigkeit auf und transportiert diese aus dem Schweißdrahtmagazin ab. Es besteht somit keine Notwendigkeit, das Schweißdrahtmagazin dicht auszuführen, oder unter einen hohen Überdruck zu setzen, um das Eindringen von Feuchtigkeit zu vermeiden.

Wenn mit der Durchflussregeleinheit der Durchfluss von Spülluft durch das Schweißdrahtmagazin eingestellt wird, kann ein einfaches Regelverfahren realisiert werden, um die relative Feuchtigkeit der Spülluft an der Spülluftabführung einzustellen. Hierbei kann der Abtransport von Feuchtigkeit aus dem Schweißdrahtmagazin durch Erhöhen des Durchflusses beschleunigt werden. Umgekehrt kann ein niedriger Durchfluss eingestellt werden, wenn die relative Feuchtigkeit im Schweißdrahtmagazin ausreichend nieder ist, womit Energie und Kosten eingespart werden.

Die relative Feuchtigkeit der zugeführten Spülluft kann verringert werden, wenn in der Spülluftversorgungsleitung vor der Durchflussregeleinheit ein regelbarer Entfeuchter oder eine Druckregeleinheit angeordnet ist. Dieser Entfeuchter hat dabei keinen Einfluss auf die Druckverhältnisse und schützt auch andere Druckluftverbraucher vor zu hoher Feuchtigkeit. Ein Entfeuchter in der zugeführten Spülluft kann die relative Feuchtigkeit der Spülluft an der Spülluftzuführung senken und somit auch in weiterer Folge den bedarfsgerechten Durchfluss.

Mit einem Feuchtesensor an der Spülluftabführung kann die relative Feuchtigkeit der aus dem Schweißdrahtmagazin abgeführten Spülluft gemessen werden und der Messwert kann als Istwert für eine Regelung der Feuchtigkeit im Schweißdrahtmagazin herangezogen werden. Die Ermittlung und Einstellung des bedarfsgerechten Durchflusses kann so automatisiert erfolgen.

Mit einem Durchflusssensor an der Spülluftabführung kann einfach ermittelt werden, ob am Schweißdrahtmagazin ungewöhnlich viel Spülluft verloren geht, was auf eine große Undichtheit des Schweißdrahtmagazins oder eine andere Störung hindeuten kann. Weiters kann mit diesem Durchflusssensor überprüft werden, ob der Feuchtesensor ordnungsgemäß von Spülluft aus dem Schweißdrahtmagazin umspült wird. Nur wenn das der Fall ist, ist die Messung der relativen Feuchtigkeit in der Auslassleitung repräsentativ für die Feuchtigkeit im Schweißdrahtmagazin und somit richtig.

Um den Schweißdraht im Schweißdrahtmagazin gleichmäßig mit Spülluft zu beaufschlagen, kann im Schweißdrahtmagazin eine Spülluftleiteinrichtung vorgesehen sein.

Um den Schweißdraht auch im Drahtförderschlauch spülen zu können, kann vorgesehen sein, den Drahtförderschlauch als Spülluftabführung, gegebenenfalls als zusätzliche Spülluftabführung, zu nutzen.

Die gegenständliche Erfindung wird nachfolgend unter Bezugnahme auf die Figuren 1 bis 4 näher erläutert, die beispielhaft, schematisch und nicht einschränkend vorteilhafte Ausgestaltungen der Erfindung zeigen. Dabei zeigt
- Fig.1: ein erfindungsgemäßes Schweißdrahtmagazin mit Schutzvorrichtung,
- Fig.2: eine Anordnung mit zwei in Serie geschalteten Schweißdrahtmagazinen,
- Fig.3: eine einfache Regelung des Durchflusses von trockener Spülluft und
- Fig.4: ein Blockschaltbild eines einfachen Regelkonzepts.

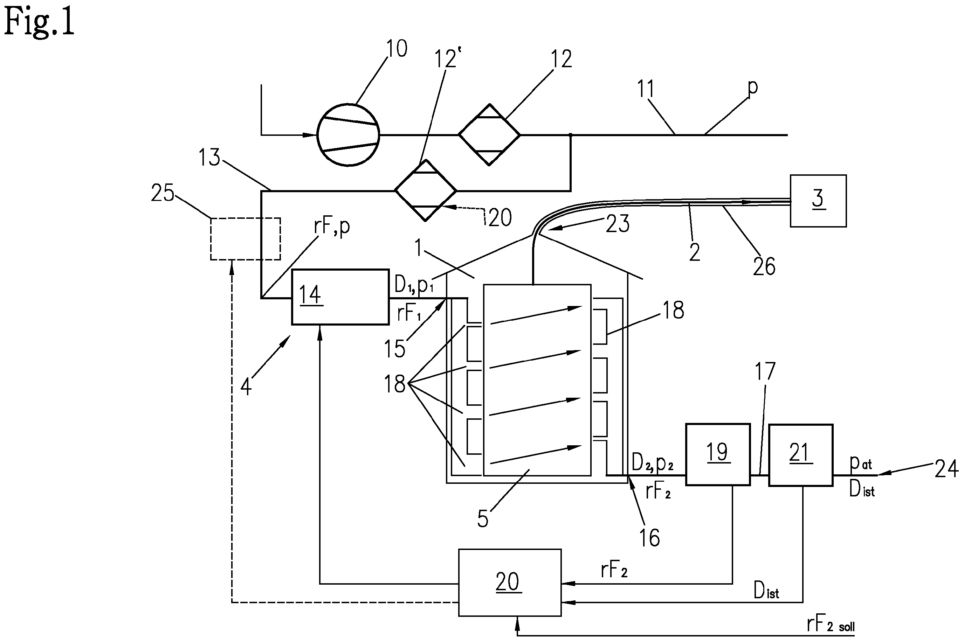

In Fig.1 ist ein Schweißdrahtmagazin 1 dargestellt, in dem in hinlänglich bekannter Weise ein Schweißdraht 2 eingelegt ist, der von einem, hier nicht im Detail gezeigten, Schweißprozess 3 aus dem Schweißdrahtmagazin 1 entnommen und zum Schweißen verwendet wird. Ein Schweißgerät mit benötigten Zusatzeinrichtungen, wie beispielsweise einer Schutzgasversorgung, für den Schweißprozess 3 ist hinlänglich bekannt und wird hier nicht im Detail dargestellt oder beschrieben. Eine Vorschubeinheit zum Fördern des Schweißdrahtes 2 kann im Schweißdrahtmagazin 1 vorgesehen sein, kann aber auch im Schweißgerät selbst und/oder im Schweißbrenner angeordnet sein. Der Schweißdraht 2 ist im Schweißdrahtmagazin 1 in der Regel in Form einer Schweißdrahtspule 5 eingelegt, wie in Fig.1 angedeutet. Um den Schweißdraht 2 vor der in der Umgebungsluft enthaltenen Feuchtigkeit zu schützen, ist eine Schutzvorrichtung 4 vorgesehen, die nachfolgend im Detail beschrieben ist.

Über einen Kompressor 10 wird Umgebungsluft komprimiert und Spülluft mit Druck p erzeugt und über eine Druckluftleitung 11 zu Verfügung gestellt. In der Druckluftleitung 11 ist in der Regel auch schon ein Entfeuchter 12, im einfachsten Fall in Form eines Wasserabscheiders, enthalten, der die relative Feuchtigkeit rF der erzeugten Spülluft reduziert bzw. ausgefallenes Wasser abführt. Druckluft ist in der Regel in jeder Fertigungsstätte verfügbar, da viele Komponenten, wie beispielsweise verschiedene Werkzeuge, einer Fertigungsstätte eine Druckluftversorgung benötigen, und ist somit im Normalfall daher nicht Teil der Schutzvorrichtung 4, was eine Kostenersparnis darstellt. Selbstverständlich kann die Schutzvorrichtung 4 aber auch mit einem eigenen Kompressor zur Erzeugung der Druckluft aus der Umgebungsluft ausgestattet sein, falls vor Ort keine geeignete Druckluftversorgung verfügbar sein sollte.

Die Schutzvorrichtung 4 entnimmt der Druckluftleitung 11 über eine Spülluftversorgungsleitung 13 Spülluft. Falls in der Druckluftleitung 11 ein Entfeuchter 12 vorgesehen ist (was üblicherweise der Fall sein wird), zweigt die Spülluftversorgungsleitung 13 vorzugsweise nach dem Entfeuchter 12 ab.

In der Spülluftversorgungsleitung 13 ist somit Spülluft mit einem ersten Druck p und mit einer ersten relativen Feuchtigkeit rF vorhanden. In der Spülluftversorgungsleitung 13 könnte auch ein zusätzlicher Entfeuchter 12' angeordnet sein. Ebenso ist es denkbar, in der Spülluftversorgungsleitung 13 eine Druckregeleinheit 25 anzuordnen, beispielsweise um den Druck p in der Druckluftleitung 11 für die Schutzvorrichtung 4 zu erhöhen oder abzusenken. Der zusätzliche Entfeuchter 12' und/oder die Druckregeleinheit 25 könnten auch geregelt sein, um eine gewünschte erste relative Feuchtigkeit rF bzw. einen gewünschten ersten Druck p in der Spülluftversorgungsleitung 13 einzustellen.

Mit einer Durchflussregeleinheit 14 in der Spülluftversorgungsleitung 13 wird der bedarfsgerechte Durchfluss von Spülluft durch das Schweißdrahtmagazin 1 eingestellt und somit der stromaufwärts der Durchflussregeleinheit 14 herrschende erste Druck p in der Spülluftversorgungsleitung 13 auf den zweiten Druck p₁ nach der Durchflussregeleinheit 14 reduziert. Die Durchflussregeleinheit 14 kann als Massenflussregler zum Regeln eines Massenstromes oder äquivalent als Volumenstromregler zum Regeln eines Volumenstroms ausgeführt sein. Im Folgenden wird allgemein von Durchfluss D, also Massenstrom oder Volumenstrom, gesprochen.

Die Spülluftversorgungsleitung 13 mündet stromabwärts der Durchflussregeleinheit 14 über eine Spülluftzuführung 15 in das Schweißdrahtmagazin 1, wodurch dem Schweißdrahtmagazin 1 über die Spülluftzuführung 15 Spülluft mit einem bestimmten Durchfluss D₁, einem bestimmten zweiten Druck p₁ und einer bestimmten zweiten relativen Feuchtigkeit rF₁ zugeführt wird. Das Schweißdrahtmagazin 1 weist weiters eine Spülluftabführung 16 auf, über die die Spülluft aus dem Schweißdrahtmagazin 1 abgeführt wird. An der Spülluftabführung 16 liegt der Durchfluss D₂, der Druck p₂ und die relative Feuchtigkeit rF₂ vor. Der abströmende Durchfluss D₂ ist in der Regel geringer als der zuströmende Durchfluss D₁, da kein dichtes Schweißdrahtmagazin 1 vorliegen muss. D.h., dass Spülluft auch an anderer Stelle am Schweißdrahtmagazin 1 entweichen kann. Der Druck p2 ist nur geringfügig niedriger als p₁ da die Strömungsquerschnitte im Drahtmagazin ausreichend groß sein sollen. Die relative Feuchtigkeit rF₂ an der Spülluftabführung 16 wird gegenüber der relativen Feuchtigkeit rF₁ an der Spülluftzuführung 15 erhöht sein, weil die Spülluft sich mit der Feuchtigkeit im Schweißdrahtmagazin 1 anreichert und diese abtransportiert.

Die Spülluftabführung 16 kann auch mit einer Spülluftabführleitung 17 verbunden sein, die den Spülluftauslass 24 der Spülluftabführung 16 ausbildet und die vorzugsweise in die Umgebung mündet. Die Spülluftabführung 16 kann aber auch direkt in die Umgebung münden und so den Spülluftauslass 24 ausbilden. Am Spülluftauslass 24 der Spülluftabführung16 wirkt somit ein dritter Druck, vorzugsweise der Umgebungsdruck, pₐₜ. Die Spülluftabführleitung 17, bzw. die Spülluftabführung 16 selbst, hat vorzugsweise einen ausreichend großen Strömungsquerschnitt, sodass sich auch bei maximalen Durchfluss Dₘₐₓ in das Schweißdrahtmagazin 1 nur ein geringes Druckgefälle zwischen dem zweiten Druck p₁ an der Spülluftzuführung 15 und dem dritten Druck pₐₜ am Spülluftauslass 24 der Spülluftabführung 16, vorzugsweise (p₁-pₐₜ)≈(p₂-pₐₜ)< 0,2 bar, ausbildet. Das bedeutet insbesondere, dass aufgrund des ausreichend großen Strömungsquerschnittes ein ausreichend geringer Strömungswiderstand zwischen Spülluftzuführung 15 und Spülluftauslass 24 vorliegt. Der zweite Druck p₁ vor dem Schweißdrahtmagazin 1 hängt somit nur vom gerade herrschenden dritten Druck pₐₜ am Spülluftauslass 24 der Spülluftabführung 16 des Schweißdrahtmagazins 1 und dem sich aufgrund des geringen Strömungswiderstand einstellenden Druckgefälle (p₁-pₐₜ), welches wiederum aus dem eingestellten Durchfluss resultiert, über das Schweißdrahtmagazin 1 ab. Der zweite Druck p₁ vor dem Schweißdrahtmagazin 1 wird damit nicht eingestellt, sondern ergibt sich im Betrieb des Schweißdrahtmagazins 1. Durch die somit stattfindende Druckreduktion vom ersten Druck p auf den zweiten Druck p₁ ergibt sich aber zwangsweise auch eine Reduzierung der Feuchtigkeit der Spülluft, wie nachfolgend noch im Detail ausgeführt wird.

Im Schweißdrahtmagazin 1 kann vorteilhaft auch eine Spülluftleiteinrichtung 18, z.B. in Form von Leitblechen, Düsen, Ausströmöffnungen, Sammeleinrichtungen, etc., vorgesehen sein, um eine möglichst gleichmäßige Durchströmung der entfeuchteten bzw. trockenen Spülluft durch das Schweißdrahtmagazin 1 und damit eine gleichmäßige Überströmung des Schweißdrahtes 2 mit entfeuchteter Spülluft sicherzustellen, wie in Fig.1 angedeutet. Vorzugsweise wird aber ein handelsübliches Schweißdrahtmagazin 1 (beispielsweise eine Schweißdrahtverpackung oder ein Schweißdrahtfass) verwendet, um die Kosten zu senken, wobei gegebenenfalls nur mehr eine Spülluftzuführung 15 und eine Spülluftabführung 16 vorzusehen sind. Im Falle einer Schweißdrahtspule 5 kann auch vorgesehen sein, die Schweißdrahtspule 5 gleichzeitig radial von außen und von innen zu spülen. Es ist auch denkbar, eine handelsübliche Schweißdrahtaufnahme mit einem darin angeordneten Schweißdraht 2 mit einer geschlossenen Einhausung, die eine Spülluftzuführung 15 und eine Spülluftabführung 16 aufweist, zu versehen. Hierbei wird die Einhausung mit der darin befindlichen handelsüblichen Schweißdrahtaufnahme als mit trockener Spülluft gespültes Schweißdrahtmagazin 1 angesehen. Die Einhausung könnte dabei auch ein kompletter Lagerraum sein, in dem auch mehrere handelsübliche Schweißdrahtaufnahmen vorrätig gehalten werden könnten. Durch die Undichtheiten der Schweißdrahtaufnahmen wird auch hier gewährleistet, dass der Schweißdraht 2 in der Schweißdrahtaufnahme von trockener Spülluft umspült wird und damit vor Feuchtigkeit geschützt wird.

Durch die Durchflussregeleinheit 14 wird ein im Idealfall bedarfsgerechter Durchfluss von Spülluft in der Spülluftversorgungsleitung 13 eingestellt und der erste Druck p vor der Durchflussregeleinheit 14 auf den zweiten Druck p₁ nach der Durchflussregeleinheit 14 entspannt, wodurch sich bekanntermaßen die relative Feuchtigkeit rF der Spülluft im Verhältnis dieser beiden Drücke p, p₁ gemäß der (vereinfachten) Beziehung rF₁ = rF ^{∗} p₁ / p ändert, insbesondere mit p>p₁ reduziert. Demnach realisiert die Durchflussregeleinheit 14 eine Reduktion der relativen Feuchtigkeit aufgrund der sich einstellenden Druckverhältnisse.

Beispielsweise liegt in der Druckluftleitung 11 Spülluft mit einem ersten Druck p = 6bar (ein allfälliger Druckabfall im Entfeuchter 12 bzw. 12' wird in der Beschreibung der Einfachheit vernachlässigt) und einer ersten relativen Feuchtigkeit rF = 32% (was einem Drucktaupunkt von 3°C entspricht und ein Standardwert eines gängigen Entfeuchters 12 ist) vor. Der zweite Druck p₁ stellt sich im Schweißdrahtmagazin 1 aufgrund des von der Durchflussregeleinheit 14 eingestellten bedarfsgerechten Durchflusses, der Strömungswiderstände und dem Druckgefälle (p₁-pₐₜ) zwischen Spülluftzuführung 15 des Schweißdrahtmagazin 1 und dem Spülluftauslass 24 des Schweißdrahtmagazins 1 ein. Die Durchflussregeleinheit 14 bewirkt so eine Reduktion des Drucks p auf den Druck p1. Bei einem dritten Druck, vorzugsweise dem Umgebungsdruck, pₐₜ = 1.013 bar am Spülluftauslass 24 der Spülluftabführung 16 und dem zweiten Druck p₁ ≈ p₂= 1.1 bar an der Spülluftzuführung 15 ergibt sich dann die zweite relative Feuchtigkeit rF₁ der Spülluft in der Spülluftversorgungsleitung 13 nach der Durchflussregeleinheit 14, und damit auch an der Spülluftzuführung 15, zu rF₁ = rF ^{∗} p₁ /p = 6% (was einem Drucktaupunkt von -18.6°C entspricht). Wenn angenommen wird, dass in der Umgebung des Schweißdrahtmagazins 1 ein höherer Wert der relativen Feuchtigkeit vorliegt, als an der Spülluftzuführung 15, dann kann die relative Feuchtigkeit am Spülluftauslass 24 und an der Spülluftabführung 16 des Schweißdrahtmagazins 1 nicht unter rF₁ sinken, d.h. es gilt rF₁ ≤ rF₂.

Nachdem sich der zweite Druck p₁ an der Spülluftzuführung 15 zum Schweißdrahtmagazin 1 ergibt, ist auch die zweite relative Feuchtigkeit rF₁ der dem Schweißdrahtmagazin 1 zugeführten trockenen Spülluft, zumindest unter der Voraussetzung eines gleichbleibenden ersten Druckes p und einer gleichbleibenden ersten relative Feuchtigkeit rF, vorgegeben. Damit kann zum Einstellen der Feuchtigkeit im Schweißdrahtmagazin 1 mit der Durchflussregeleinheit 14 der Durchfluss D₁ von trockener Spülluft mit relativer Feuchtigkeit rF₁ durch das Schweißdrahtmagazin 1 geregelt werden.

Wenn in der Spülluftabführleitung 17 ein Feuchtigkeitssensor 19 angeordnet wird, der die vorliegende relative Feuchtigkeit rF₂ an der Spülluftabführung 16 im Durchfluss D₂ misst, kann eine einfache Durchflussregelung implementiert werden, die automatisch den richtigen, bedarfsgerechten Durchfluss ermittelt.

Es kann angenommen werden, dass der erste Druck p in der Druckluftleitung 11 immer konstant bleibt, da ja auch andere Komponenten in der Fertigungsstätte damit auch versorgt werden müssen. Konstant ist im Wesentlichen auch der dritte Druck, in der Regel der Umgebungsdruck, pₐₜ, da der Auslass 24 der Spülluft vorzugsweise in die Umgebung erfolgt. Somit ist auch immer ein ausreichendes Druckgefälle (p₁-pₐₜ) vorhanden, sodass der Durchflussregler 14 einen bedarfsgerechten Durchfluss D durch das Schweißdrahtmagazin 1 von der Spülluftzuführung 15 zur Spülluftabführung 16 gewährleisten kann.

Jener minimale Durchfluss D, der die Unterschreitung der maximal zulässigen Feuchtigkeit an der Spülluftabführung 16 erzielt, wird als bedarfsgerechter Durchfluss D bezeichnet. Dieser Durchfluss D wird gebraucht, um die Vorgaben des Bedieners hinsichtlich Feuchtigkeit einzuhalten. Weiters wird der bedarfsgerechte Durchfluss von der Feuchtigkeit, welche bei einem Wechselvorgang in das Schweißdrahtmagazin 1 eingebracht wird, von der Feuchtigkeit die über die Oberfläche des Schweißdrahtmagazins 1 eindringt, von der relativen Feuchtigkeit rF₁ die die Spülluft an der Spülluftzuführung 15 besitzt der erlaubten, maximalen Feuchtigkeit rF₂ an der Spülluftabführung 16 beeinflusst.

Mit der Durchflussregeleinheit 14 wird also der dem Schweißdrahtmagazin 1 zgeführte Durchfluss D₁ der Spülluft so geregelt, sodass die relative Feuchtigkeit rF₂ an der Spülluftabführung 16 unter einem, vom Anwender zu definierenden Maximalwert rF_{2,soll} gehalten wird. Ist die, mit dem Feuchtigkeitssensor 19 gemessene, vorliegende Feuchtigkeit rF₂ an der Spülluftabführung 16 unter dem Maximalwert, kann der Durchfluss D₁ reduziert werden, da offensichtlich weniger Spülluft ausreicht, um die Feuchtigkeit aus dem Schweißdrahtmagazin 1 abzutransportieren. Somit wird der Verbrauch von Spülluft reduziert und Energie gespart. Tritt hingegen von außen aufgrund von Undichtheiten des Schweißdrahtmagazin 1 Feuchtigkeit in das Schweißdrahtmagazin 1 ein und kann die eindringende Feuchtigkeit mit dem aktuell eingestellten Durchfluss D₁ nicht abgeführt werden, so wird die an der Spülluftabführung 16 vorliegende relative Feuchtigkeit rF₂ ansteigen. In diesem Fall wird der Durchfluss D₁ an Spülluft erhöht, um die zu viel vorhandene Feuchtigkeit aus dem Schweißdrahtmagazin 1 abtransportieren zu können und die relative Feuchtigkeit rF₂ wieder unter den erlaubten Maximalwert rF_{2,soll} zu bringen.

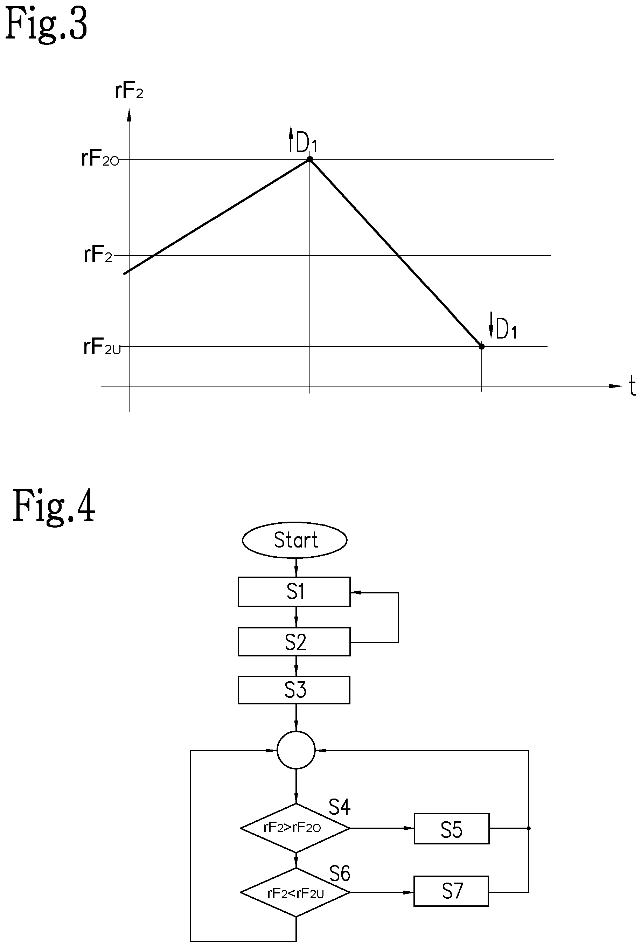

Um ein permanentes Umschalten der Schutzvorrichtung 4 zu verhindern, kann ein oberer Schwellwert rF_{2O} (gleich der maximalen relative Feuchtigkeit rF_{2,soll}) und unterer Schwellwert rF_{2U} (kleiner der maximalen relative Feuchtigkeit rF_{2,soll)} für die vorliegende relative Feuchtigkeit rF₂ definiert bzw. vorgegeben werden, der die Schaltpunkte für die Erhöhung bzw. Absenkung des Durchfluss D₁ vorgibt, wie in Fig.3 angedeutet. Es kann die relative Feuchtigkeit rF₂ aber auch in einem geschlossenen Regelkreis mittels eines implementierten Regelgesetzes auf eine vorgegebenen relative Feuchtigkeit rF_{2,soll} geregelt werden. Hierzu kann eine Steuereinheit 20 vorgesehen sein, die den Durchfluss D₁ regelt, wie in Fig.1 angedeutet.

Es kann auch vorgesehen sein, dass die zweite relative Feuchtigkeit rF₁ an der Spülluftzuführung 15 verstellt werden kann. Ist beispielsweise in der Spülluftversorgungsleitung 13 ein zusätzlicher regelbarer Entfeuchter 12' oder eine Druckregeleinheit 25 (angedeutet in Fig.1) angeordnet, kann die zweite relative Feuchtigkeit rF₁ gemäß der genannten Beziehung rF₁ = rF ^{∗} p₁ / p verstellt werden, indem der erste Druck p und/oder die erste relative Feuchtigkeit rF in der Spülluftversorgungsleitung 13 stromaufwärts der Durchflussregeleinheit 14 verändert wird. In diesem Fall könnte man auch gänzlich auf die Regelung des Durchflusses D₁ verzichten und z.B. einen konstanten Durchfluss D₁ einstellen. Es ist aber auch denkbar, die Verstellung der ersten relativen Feuchtigkeit rF und/oder des ersten Druckes p in der Spülluftversorgungsleitung 13 zusätzlich zur Regelung des Durchflusses D anzuwenden. Es ist aber wichtig zu verstehen, dass durch eine Regelung des ersten Drucks p nicht das Druckgefälle (p₁-pₐₜ) zwischen Spülluftzuführung 15 und Spülluftauslass 24 beeinflusst wird, sondern nur die zweite relative Feuchtigkeit rF₁.

In der Regel wird eine genaue Regelung der vorliegenden relativen Feuchtigkeit rF₂ an der Spülluftabführung 16 aber nicht zwingend erforderlich sein und es kann oftmals ein vereinfachtes Verfahren zum Betreiben der Schutzvorrichtung 4 ausreichend sein. Dies wird dadurch begründet, dass es ein kein "zu trocken" in der Lagerung des Schweißdrahtes gibt und damit lediglich überwacht werden muss, dass eine maximale relative Feuchtigkeit rF_{2,soll} an der Spülluftabführung 16 nicht überschritten wird. Ein mögliches einfaches Regelkonzept wird nachfolgend anhand der Fig.4 beschrieben.

Im Schritt S1 wird nach dem Einschalten der Schutzvorrichtung 4 ein bestimmter Durchfluss D₁, vorzugsweise ein minimaler Durchfluss Dₘᵢₙ eingestellt. Im Schritt S2 kann überprüft werden, ob das Schweißdrahtmagazin 1 geschlossen ist (D₁=D₂). Ist das der Fall, kann im Schritt S3 eine Schnellentfeuchtung vorgesehen sein. Dafür wird für eine bestimmte vorgegebene Zeit oder bis die gemessene relative Feuchtigkeit rF₂ einen bestimmten Wert unterschritten hat, ein maximaler Durchfluss Dₘₐₓ eingestellt, um das Volumen des Schweißdrahtmagazins 1 möglichst rasch zu Entfeuchten. Die Schritte S2 und S3 sind optional. Danach wird laufend überprüft, ob die gemessene relative Feuchtigkeit rF₂ den oberen Schwellwert rF_{2O} überschreitet (Schritt S4) oder den unterer Schwellwert rF_{2U} unterschreitet (Schritt S6). Falls der obere Schwellwert rF_{2O} überschritten wird, wird der Durchfluss D₁ erhöht (Schritt S5), vorzugsweise auf den maximalen Durchfluss Dₘₐₓ. Falls der untere Schwellwert rF_{2U} unterschritten wird, wird der Durchfluss D₁ abgesenkt (Schritt S7), vorzugsweise auf den minimalen Durchfluss Dₘᵢₙ.

Mit einem Durchflusssensor 21 kann auch ein Durchfluss D₂ in der Spülluftabführleitung 17 gemessen werden, anhand dessen auf die Dichtheit des Schweißdrahtmagazins 1 rückgeschlossen werden kann, da ja der zugeführte, Durchfluss D₁ bekannt ist. Ist der mit dem Durchflusssensor 21 gemessene Durchfluss D₂ deutlich niedriger als ein erwarteter bzw. vorgegebener Wert (Durchfluss D₁), entweicht ein großer Teil der Spülluft über Undichtheiten des Schweißdrahtmagazins 1, was als Fehlermeldung angezeigt werden kann, beispielsweise von der Steuereinheit 20. Hier ist anzumerken, dass das Schweißdrahtmagazin 1 in der Regel niemals zur Gänze dicht sein wird und es sogar erwünscht sein kann, dass das Schweißdrahtmagazin 1 in gewissem Ausmaß undicht ist, um in das Schweißdrahtmagazin 1 eindringende Feuchtigkeit auch wieder rasch abführen zu können. Damit wird der Durchfluss D₂ in der Schutzgasabführleitung 17 meistens niedriger sein, als der zugeführte Durchfluss D₁, was in der Steuereinheit 20 bei der Ermittlung allfälliger ungewöhnlicher Undichtheiten des Schweißdrahtmagazins 1 zu berücksichtigen ist. Es kann damit ein handelsübliches Schweißdrahtmagazin 1 (z.B. eine Schweißdrahtverpackung, oder ein Schweißdrahtfass) verwendet werden, ohne dass spezielle Abdichtungen erforderlich sind. Somit entstehen auch keine Zusatzkosten.

Eine alternative Überprüfung der Gehäusedichtheit kann auch über den Feuchtesensor 19 erfolgen. Tritt aufgrund einer Undichtheit der trockene Durchfluss an einer anderen Stelle aus, dann misst der Feuchtesensor früher oder später die, im Allgemeinen höhere Umgebungsfeuchte und das wird zu einer Fehlermeldung in der Steuerung/Regelung führen.

In einer vorteilhaften Ausgestaltung kann vorgesehen sein, einen Drahtförderschlauch 26, über den der Schweißdraht 2 vom Schweißdrahtmagazin 1 zum Schweißprozess 3 gefördert wird als, gegebenenfalls als zusätzliche, Spülluftabführung 16 des Schweißdrahtmagazins 1 zu nutzen. Dies hätte den Vorteil, dass der Schweißdraht 2 auch im Drahtförderschlauch 26 vor zu hoher Feuchtigkeit geschützt wäre.

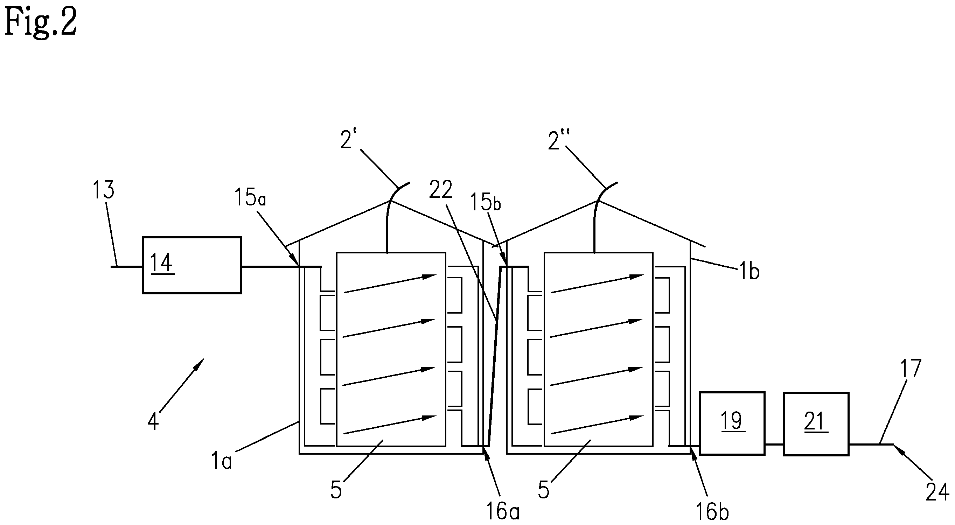

Mit der erfindungsgemäßen Schutzvorrichtung 4 können auch mehrere in Serie geschaltete Schweißdrahtmagazine 1a, 1b bedient werden, wie in Fig.2 dargestellt. Die Spülluftabführung 16a eines ersten Schweißdrahtmagazin 1 ist mit einer Verbindungsleitung 22 mit der Spülluftzuführung 15b eines nachgeschalteten, zweiten Schweißdrahtmagazins 1b verbunden. An der Spülluftabführung 16b des zweiten Schweißdrahtmagazins 1b ist die Spülluftabführleitung 17 angeschlossen und die Spülluftversorgungsleitung 13 ist an die Spülluftzuführung 15a des ersten Schweißdrahtmagazins 1a angeschlossen. Auf diese Weise lassen sich natürlich auch mehr als zwei Schweißdrahtmagazine 1 zusammenschalten. Damit können auch mehrere in Serie geschaltete Schweißdrahtmagazine 1a, 1b von einer Schutzvorrichtung 4 mit entfeuchteter Spülluft versorgt werden. Ansonsten gelten die obigen Ausführungen analog.

Anstatt einer Spülluftabführung 16 könnte auch vorgesehen sein, den Auslass 23 für den Schweißdraht 2 oder den Drahtförderschlauch 26 im Schweißdrahtmagazin 1 als, gegebenenfalls als zusätzliche, Spülluftabführung 16 zu nutzen. In diesem Falle könnten der Feuchtigkeitssensor 19 und/oder der Massenstromsensor 21 auch im Bereich des Auslasses 23 angeordnet sein. Da der Strömungsquerschnitt im Auslass 23 für den Schweißdraht im Allgemeinen sehr gering ist, können bei einer alleinigen Verwendung dieses Auslasses 23 jedoch nur sehr geringe Durchflüsse D₁ eingestellt werden. Somit stellt das eine mögliche aber nicht optimale Implementierung dar.

## Patentansprüche

1. Schweißdrahtmagazin zur Aufnahme eines Schweißdrahtes (2, 2', 2") mit einer Schutzvorrichtung (4) gegen Feuchtigkeit, wobei am Schweißdrahtmagazin (1, 1a, 1b) eine Spülluftzuführung (15), in die eine Spülluftversorgungsleitung (13) zur Zuführung von trockener Spülluft mündet, und eine Spülluftabführung (16) mit einem Spülluftauslass (24) zur Abführung von Spülluft aus dem Schweißdrahtmagazin (1, 1a, 1b) vorgesehen sind, **dadurch gekennzeichnet, dass** in der Spülluftversorgungsleitung (13) eine Durchflussregeleinheit (14) angeordnet ist, die einen dem Schweißdrahtmagazin (1, 1a, 1b) zugeführten Durchfluss (D₁) von Spülluft einstellt, **dass** vor der Durchflussregeleinheit (14) in der Spülluftversorgungsleitung (13) ein erster Druck (p) wirkt, **dass** nach der Durchflussregeleinheit (14) in der Spülluftversorgungsleitung (13) und an der Spülluftzuführung (15) ein zweiter Druck (p₁) wirkt, der niedriger als der erste Druck (p) ist, **dass** am Spülluftauslass (24) ein dritter Druck (pₐₜ) wirkt, der niedriger als der zweiter Druck (p₁) ist, **und dass** sich der zweite Druck (p₁) an der Spülluftzuführung (15) aus dem eingestellten Durchfluss (D₁), dem dritten Druck (pₐₜ) und dem Strömungswiderstand zwischen der Spülluftzuführung (15) und dem Spülluftauslass (24) ergibt, wobei sich durch die Druckentspannung vom ersten Druck (p) auf den zweiten Druck (p₁) die relative Feuchtigkeit (rF₁) der Spülluft reduziert.

2. Schweißdrahtmagazin nach Anspruch 1, **dadurch gekennzeichnet, dass** das Druckgefälle (p₁-pₐₜ) zwischen zweiten Druck (p₁) und dritten Druck (pₐₜ) kleiner 0,2bar ist.

3. Schweißdrahtmagazin nach Anspruch 1 oder 2, **dadurch gekennzeichnet, dass** die Spülluftabführung (16) mit einer Spülluftabführleitung (17) verbunden ist, deren Auslass den Spülluftauslass (24) ausbildet und in die Umgebung mündet.

4. Schweißdrahtmagazin nach einem der Ansprüche 1 bis 3, **dadurch gekennzeichnet, dass** der Durchfluss (D₁) von Spülluft durch das Schweißdrahtmagazin (1, 1a, 1b) mit der Durchflussregeleinheit (14) veränderbar ist, um die relative Feuchtigkeit (rF₂) der Spülluft an der Spülluftabführung (16) einzustellen.

5. Schweißdrahtmagazin nach einem der Ansprüche 1 bis 4, **dadurch gekennzeichnet, dass** in der Spülluftversorgungsleitung (13) vor der Durchflussregeleinheit (14) ein regelbarer Entfeuchter (12') angeordnet ist, mit dem die relative Feuchtigkeit (rF) der Spülluft vor der Durchflussregeleinheit (14) einstellbar ist.

6. Schweißdrahtmagazin nach einem der Ansprüche 1 bis 5, **dadurch gekennzeichnet, dass** in der Spülluftversorgungsleitung (13) vor der Durchflussregeleinheit (14) eine Druckregeleinheit (25) angeordnet ist, mit dem der erste Druck (p) der Spülluft vor der Durchflussregeleinheit (14) einstellbar ist.

7. Schweißdrahtmagazin nach einem der Ansprüche 1 bis 6, **dadurch gekennzeichnet, dass** an der Spülluftabführung (16) ein Feuchtesensor (19) angeordnet ist.

8. Schweißdrahtmagazin nach einem der Ansprüche 1 bis 7, **dadurch gekennzeichnet, dass** an der Spülluftabführung (16) ein Durchflusssensor (21) angeordnet ist.

9. Schweißdrahtmagazin nach einem der Ansprüche 1 bis 8, **dadurch gekennzeichnet, dass** im Schweißdrahtmagazin (1, 1a, 1b) eine Spülluftleiteinrichtung (18) vorgesehen ist.

10. Schweißdrahtmagazin nach einem der Ansprüche 1 bis 9, **dadurch gekennzeichnet, dass** am Schweißdrahtmagazin (1, 1a, 1b) als Spülluftabführung (16) ein Drahtförderschlauch (26) vorgesehen ist.

11. Verfahren zum Schutz eines Schweißdrahtes (2, 2', 2") in einem Schweißdrahtmagazin (1, 1a, 1b) gegen Feuchtigkeit, **dadurch gekennzeichnet, dass** ein dem Schweißdrahtmagazin (1, 1a, 1b) zugeführter Durchfluss (D₁) von Spülluft mit einer Durchflussregeleinheit (14) eingestellt wird, **dass** die Spülluft der Durchflussregeleinheit (14) mit einem ersten Druck (p) zugeführt wird und an einem Spülluftauslass (24) des Schweißdrahtmagazin (1, 1a, 1b) mit einem dritten Druck (pₐₜ) abgeführt wird, **und dass** sich an einer Spülluftzuführung (15) des Schweißdrahtmagazins (1, 1a, 1b) aus dem eingestellten Durchfluss (D₁), dem dritten Druck (pₐₜ) und einem Strömungswiderstand zwischen der Spülluftzuführung (15) und dem Spülluftauslass (24) ein zweiter Druck (p₁) an der Spülluftzuführung (15) ergibt, der niedriger als der erste Druck (p) ist, wobei sich durch die Druckentspannung vom ersten Druck (p) auf den zweiten Druck (p₁) die relative Feuchtigkeit (rF₁) der Spülluft reduziert.

12. Verfahren nach Anspruch 11, **dadurch gekennzeichnet, dass** das Druckgefälle (p₁-pₐₜ) zwischen zweiten Druck (p₁) und dritten Druck (pₐₜ) kleiner 0,2bar eingestellt wird.

13. Verfahren nach Anspruch 11 oder 12, **dadurch gekennzeichnet, dass** mit der Durchflussregeleinheit (14) der Durchfluss von Spülluft durch das Schweißdrahtmagazin (1, 1a, 1b) eingestellt wird, um die relative Feuchtigkeit (rF₂) der Spülluft an der Spülluftabführung (16) einzustellen.

14. Verfahren nach einem der Ansprüche 11 bis 13, **dadurch gekennzeichnet, dass** mit einem Entfeuchter (12') vor der Durchflussregeleinheit (14) die erste relative Feuchtigkeit (rF) der Spülluft verändert wird.

15. Verfahren nach einem der Ansprüche 11 bis 14, **dadurch gekennzeichnet, dass** mit einer Druckregeleinheit (25) vor der Durchflussregeleinheit (14) der erste Druck (p) der Spülluft vor der Durchflussregeleinheit (14) verändert wird.

16. Verfahren nach einem der Ansprüche 11 bis 15, **dadurch gekennzeichnet, dass** die relative Feuchtigkeit (rF₂) stromabwärts des Schweißdrahtmagazins (1, 1a, 1b) gemessen wird und die Durchflussregeleinheit (14) oder der Entfeuchter (12') oder die Druckregeleinheit (25) gesteuert wird, um eine vorgegebene relative Feuchtigkeit (rF_{2,soll}) einzustellen.

17. Verfahren nach Anspruch 16, **dadurch gekennzeichnet, dass** der dem Schweißdrahtmagazin (1, 1a, 1b) zugeführte Durchfluss (D₁) geregelt wird, sodass die relative Feuchtigkeit (rF₂) an der Spülluftabführung (16) kleiner einer vorgegebenen maximalen relativen Feuchtigkeit (rF_{2,soll}) wird.

18. Verfahren nach einem der Ansprüche 11 bis 17, **dadurch gekennzeichnet, dass** der Durchfluss (D₂) stromabwärts des Schweißdrahtmagazin (1, 1a, 1b) gemessen wird und eine Störung angezeigt wird, wenn der gemessene Durchfluss (D₂) unterhalb eines vorgegebenen, erwarteten Prozentsatzes vom zugeführten Durchfluss (D₁) bleibt.

## Claims

1. A welding wire cartridge for holding a welding wire (2, 2', 2") having a protective device (4) against moisture, wherein a purging air feed (15), into which a purging air supply line (13) for supplying dry purging air discharges, and a purging air discharge (16) having a purging air outlet (24) for discharging purging air out of the welding wire cartridge (1, 1a, 1b) are provided on the welding wire cartridge (1, 1a, 1b), **characterized in that** a flow control unit (14) is arranged in the purging air supply line (13) that adjusts a flow (D₁) of purging air through the welding wire cartridge (1, 1a, 1b), **in that** a first pressure (p) is present upstream of the flow control unit (14) in the purging air supply line (13), **in that** a second pressure (p1), which is lower than the first pressure (p), is present downstream of the flow control unit (14) in the purging air supply line (13) and at the purging air feed (15), **in that** a third pressure (pₐₜ), which is lower than the second pressure (p1), is present at the purging air outlet (24), so that a pressure differential (p₁-pₐₜ) results across the welding wire cartridge (1, 1a, 1b) **and in that** the second pressure (p₁) at the purging air feed (15) results from the adjusted flow the third pressure (pₐₜ) and the flow resistance between the purging air feed (15) and the purging air outlet (24), whereby the relative humidity (rF₁) of the purging air is reduced as a result of the relief of pressure from the first pressure (p) to the second pressure (p₁).

2. The welding wire cartridge according to claim 1, **characterized in that** the pressure differential (p₁-pₐₜ) between the second pressure (p₁) and the third pressure (pₐₜ) is less than 0.2 bar.

3. The welding wire cartridge according to claim 1 or 2, **characterized in that** the purging air discharge (16) is connected to a purging air discharge line (17), the outlet of which forms the purging air outlet (24) and discharges into the environment.

4. The welding wire cartridge according to claim 1 or 3, **characterized in that** the flow (D₁) of purging air through the welding wire cartridge (1, 1a, 1b) can be changed via the flow control unit (14) in order to adjust the relative humidity (rF₂) of the purging air in the purging air discharge (16).

5. The welding wire cartridge according to claim 1 or 4, **characterized in that** an adjustable dehumidifier (12') is arranged in the purging air supply line (13) upstream of the flow control unit (14), via which the relative humidity (rF) of the purging air upstream of the flow control unit (14) can be adjusted.

6. The welding wire cartridge according to claim 1 or 5, **characterized in that** a pressure regulating unit (25) is arranged in the purging air supply line (13) upstream of the flow control unit (14), via which the first pressure (p) of the purging air upstream of the pressure regulating unit (14) can be set.

7. The welding wire cartridge according to claim 1 or 6, **characterized in that** a moisture sensor (19) is arranged on the purging air discharge (16).

8. The welding wire cartridge according to claim 1 or 7, **characterized in that** a flow sensor (21) is arranged on the purging air discharge (16).

9. The welding wire cartridge according to claim 1 or 8, **characterized in that** a purging air guide device (18) is provided in the welding wire cartridge (1, 1a, 1b).

10. The welding wire cartridge according to claim 1 or 9, **characterized in that** a wire feed hose (26) is provided on the welding wire cartridge (1, 1a, 1b) as a purging air discharge (16).

11. A method for protecting a welding wire (2, 2', 2") in a welding wire cartridge (1, 1a, 1b) against humidity, **characterized in that** a flow (D1) of purging air supplied through the welding wire cartridge (1, 1a, 1b) is adjusted by means of a flow control unit (14), **in that** the purging air is supplied to the flow control unit (14) at a first pressure (p) and is discharged at a purging air discharge (24) of the welding wire cartridge (1, 1a, 1b) at a third pressure (pₐₜ), **and in that,** at a purging air feed (15) of the welding wire cartridge (1, 1a, 1b), a second pressure (p1) at the purging air feed (15) that is lower than the first pressure (p) results from the set flow the third pressure (pₐₜ) and a flow resistance between the purging air feed (15) and the purging air outlet (24), whereby a pressure differential (p₁-pₐₜ) across the welding wire cartridge (1, 1a, 1b) results and the relative humidity (rF₁) of the purging air is reduced by the relief of pressure from the first pressure (p) to the second pressure (p₁).

12. The method according to claim 11, **characterized in that** the pressure differential (p₁-pₐₜ) between the second pressure (p₁) and the third pressure (pₐₜ) is set at less than 0.2 bar.

13. Method according to claim 11 or 12, **characterized in that** the flow of purging air through the welding wire cartridge (1, 1a, 1b) is set using the flow control unit (14) in order to set the relative humidity (rF₂) of the purging air at the purging air discharge (16).

14. The method according to claim 11 or 13, **characterized in that** the first relative humidity (rF) of the purging air is altered using a dehumidifier (12') upstream of the flow control unit (14).

15. The method according to claim 11 or 14, **characterized in that** the first pressure (p) of the purging air is altered upstream of the flow control unit (14) using a pressure regulating unit (25) upstream of the flow control unit (14).

16. The method according to claim 11 or 15, **characterized in that** the relative humidity (rF₂) is measured downstream of the welding wire cartridge (1, 1a, 1b) and the flow control unit (14) or the dehumidifier (12') or the pressure regulating unit (25) is controlled, in order to set a prescribed relative humidity (rF_{2,soll}).

17. The method according to claim 16, **characterized in that** the flow (D1) supplied to the welding wire cartridge (1, 1a, 1b) is controlled so that the relative humidity (rF₂) at the purging air discharge (16) is less than a prescribed maximum relative humidity (rF_{2,soll}).

18. The method according to claim 11 or 17, **characterized in that** the flow (D₂) is measured downstream of the welding wire cartridge (1, 1a, 1b) and an error is indicated if the measured flow (D₂) remains below a prescribed, expected percentage of the supplied flow (D₁).

## Revendications

1. Magasin de fil d'apport destiné à recevoir un fil d'apport (2, 2', 2") muni d'un dispositif de protection (4) contre l'humidité, une alimentation en air de balayage (15) dans laquelle débouche une conduite d'alimentation en air de balayage (13) pour l'amenée d'air de balayage chaud et une évacuation d'air de balayage (16) munie d'une sortie d'air de balayage (24) pour l'évacuation de l'air de balayage du magasin de fil d'apport (1, 1a, 1b) étant prévues au niveau du magasin de fil d'apport (1, 1a, 1b), **caractérisé en ce qu**'une unité de régulation de débit (14) est disposée dans la conduite d'alimentation en air de balayage (13), laquelle unité de régulation de débit ajuste un débit (D₁) d'air de balayage amené au magasin de fil d'apport (1, 1a, 1b), **en ce qu'**une première pression (p) est exercée, avant l'unité de régulation de débit (14), dans la conduite d'alimentation en air de balayage (13), **en ce qu**'une deuxième pression (p₁) est exercée, après l'unité de régulation de débit (14), dans la conduite d'alimentation en air de balayage (13) et au niveau de l'alimentation en air de balayage (15), laquelle deuxième pression est inférieure à la première pression (p), **en ce qu'**une troisième pression (pₐₜ) est exercée au niveau de la sortie d'air de balayage (24), laquelle troisième pression est inférieure à la deuxième pression (p₁), **et en ce que** la deuxième pression (p₁) au niveau de l'alimentation en air de balayage (15) résulte du débit (D₁) ajusté, de la troisième pression (pₐₜ) et de la résistance à l'écoulement entre l'alimentation en air de balayage (15) et la sortie d'air de balayage (24), la libération de pression de la première pression (p) à la deuxième pression (p₁) réduisant l'humidité relative (rF₁) de l'air de balayage.

2. Magasin de fil d'apport selon la revendication 1, **caractérisé en ce que** la chute de pression (p₁-pₐₜ) entre la deuxième pression (p₁) et la troisième pression (pₐₜ) est inférieure à 0,2 bar.

3. Magasin de fil d'apport selon la revendication 1 ou 2, **caractérisé en ce que** l'évacuation d'air de balayage (16) est reliée à une conduite d'évacuation d'air de balayage (17) dont la sortie forme la sortie d'air de balayage (24) et débouche dans l'environnement.

4. Magasin de fil d'apport selon l'une des revendications 1 à 3, **caractérisé en ce que** le débit (D₁) d'air de balayage à travers le magasin de fil d'apport (1, 1a, 1b) peut être modifié à l'aide de l'unité de régulation de débit (14) afin d'ajuster l'humidité relative (rF₂) de l'air de balayage au niveau de l'évacuation d'air de balayage (16).

5. Magasin de fil d'apport selon l'une des revendications 1 à 4, **caractérisé en ce qu**'un déshumidificateur réglable (12') est disposé dans la conduite d'alimentation en air de balayage (13) avant l'unité de régulation de débit (14), lequel déshumidificateur réglable permet d'ajuster l'humidité relative (rF) de l'air de balayage avant l'unité de régulation de débit (14).

6. Magasin de fil d'apport selon l'une des revendications 1 à 5, **caractérisé en ce qu'une** unité de régulation de pression (25) est disposée dans la conduite d'alimentation en air de balayage (13) avant l'unité de régulation de débit (14), laquelle unité de régulation de pression permet d'ajuster la première pression (p) de l'air de balayage avant l'unité de régulation de débit (14).

7. Magasin de fil d'apport selon l'une des revendications 1 à 6, **caractérisé en ce q**u'un capteur d'humidité (19) est disposé au niveau de l'évacuation d'air de balayage (16).

8. Magasin de fil d'apport selon l'une des revendications 1 à 7, **caractérisé en ce qu'**un capteur de débit (21) est disposé au niveau de l'évacuation d'air de balayage (16).

9. Magasin de fil d'apport selon l'une des revendications 1 à 8, **caractérisé en ce qu**'un dispositif de guidage d'air de balayage (18) est prévu dans le magasin de fil d'apport (1, 1a, 1b).

10. Magasin de fil d'apport selon l'une des revendications 1 à 9, **caractérisé en ce qu**'un tuyau de transport de fil (26) est prévu comme évacuation d'air de balayage (16) au niveau du magasin de fil d'apport (1, 1a, 1b).

11. Procédé de protection d'un fil d'apport (2, 2', 2") dans un magasin de fil d'apport (1, 1a, 1b) contre l'humidité, **caractérisé en ce qu'**un débit (D₁) d'air de balayage amené au magasin de fil d'apport (1, 1a, 1b) est ajusté à l'aide d'une unité de régulation de débit (14), **en ce que** l'air de balayage est amené à l'unité de régulation de débit (14) à une première pression (p) et est évacué au niveau d'une sortie d'air de balayage (24) du magasin de fil d'apport (1, 1a, 1b) à une troisième pression (pₐₜ), **et en ce que,** au niveau d'une alimentation en air de balayage (15) du magasin de fil d'apport (1, 1a, 1b), une deuxième pression (p₁) au niveau de l'alimentation en air de balayage (15) résulte du débit (D₁) ajusté, de la troisième pression (pₐₜ) et d'une résistance à l'écoulement entre l'alimentation en air de balayage (15) et la sortie d'air de balayage (24), laquelle deuxième pression est inférieure à la première pression (p), la libération de pression de la première pression (p) à la deuxième pression (p₁) réduisant l'humidité relative (rF₁) de l'air de balayage.

12. Procédé selon la revendication 11, **caractérisé en ce que** la chute de pression (p₁-pₐₜ) entre la deuxième pression (p₁) et la troisième pression (pₐₜ) est inférieure à 0,2 bar.

13. Procédé selon la revendication 11 ou 12, **caractérisé en ce que** le débit d'air de balayage à travers le magasin de fil d'apport (1, 1a, 1b) est ajusté à l'aide de l'unité de régulation de débit (14) afin d'ajuster l'humidité relative (rF₂) de l'air de balayage au niveau de l'évacuation d'air de balayage (16).

14. Procédé selon l'une des revendications 11 à 13, **caractérisé en ce que** la première humidité relative (rF) de l'air de balayage est modifiée à l'aide d'un déshumidificateur (12') avant l'unité de régulation de débit (14).

15. Procédé selon l'une des revendications 11 à 14, **caractérisé en ce que** la première pression (p) de l'air de balayage avant l'unité de régulation de débit (14) est modifiée à l'aide d'une unité de régulation de pression (25) avant le régulateur de débit (14).

16. Procédé selon l'une des revendications 11 à 15, **caractérisé en ce que** l'humidité relative (rF₂) en aval du magasin de fil d'apport (1, 1a, 1b) est mesurée et **en ce que** l'unité de régulation de débit (14) ou le déshumidificateur (12') ou l'unité de régulation de pression (25) est commandée pour ajuster une humidité relative prédéfinie (rF_{2,soll}).

17. Procédé selon la revendication 16, **caractérisé en ce que** le débit (D₁) amené au magasin de fil d'apport (1, 1a, 1b) est régulé de telle manière que l'humidité relative (rF₂) au niveau de l'évacuation d'air de balayage (16) soit inférieure à une humidité relative maximale prédéfinie (rF_{2,soll}).

18. Procédé selon l'une des revendications 11 à 17, **caractérisé en ce que** le débit (D₂) en aval du magasin de fil d'apport (1, 1a, 1b) est mesuré et **en ce qu'**un défaut est affiché lorsque le débit (D₂) mesuré demeure en dessous d'un pourcentage prédéfini et attendu du débit (D₁) amené.
